(19) Europäisches Patentamt
European Patent Office
Office européen des brevets

(11) **EP 4 378 712 B1**

(12) **EUROPÄISCHE PATENTSCHRIFT**

(45) Veröffentlichungstag und Bekanntmachung des Hinweises auf die Patenterteilung:
**14.01.2026 Patentblatt 2026/03**

(21) Anmeldenummer: **23211144.3**

(22) Anmeldetag: **21.11.2023**

(51) Internationale Patentklassifikation (IPC):
*B60C 1/00* $^{(2006.01)}$  *B60C 11/00* $^{(2006.01)}$
*C08L 21/00* $^{(2006.01)}$  *B60C 11/14* $^{(2006.01)}$

(52) Gemeinsame Patentklassifikation (CPC):
(C-Sets verfügbar)
**B60C 1/0016; B60C 11/005; B60C 11/0075; C08L 21/00;** B60C 2011/0016; B60C 2011/0025; B60C 2011/0033; B60C 2011/147  (Forts.)

(54) **FAHRZEUGLUFTREIFEN**

PNEUMATIC TYRE FOR VEHICLES

BANDAGE PNEUMATIQUE POUR VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.11.2022 DE 102022212747**

(43) Veröffentlichungstag der Anmeldung:
**05.06.2024 Patentblatt 2024/23**

(73) Patentinhaber: **Continental Reifen Deutschland GmbH**
**30175 Hannover (DE)**

(72) Erfinder:
• **Karow, Dr. Malte**
**30165 Hannover (DE)**
• **Becheanu-Böke, Dr. Armand Gabriel**
**30165 Hannover (DE)**
• **Dienes, Dr. Yvonne**
**30165 Hannover (DE)**
• **Osiak, Jaroslaw**
**30165 Hannover (DE)**
• **Wackerhage, Tanja**
**30165 Hannover (DE)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
EP-A1- 2 987 651   JP-A- 2007 131 084
JP-A- H 068 708   JP-A- H02 189 203

**(Forts. nächste Seite)**

(52) Gemeinsame Patentklassifikation (CPC): (Forts.)

C-Sets
**C08L 21/00, C08L 7/00, C08K 3/013**

**Beschreibung**

Die Erfindung betrifft einen Fahrzeugluftreifen mit einem eine Profilierung enthaltenden Laufstreifen, welcher aus porösem Gummimaterial besteht oder einen aus porösem Gummimaterial bestehenden, die Profilierung enthaltenden radial äußeren Laufstreifenteil aufweist, wobei der aus porösem Gummimaterial bestehende Laufstreifen bzw. der aus porösem Gummimaterial bestehende, radial äußere Laufstreifenteil aus einer einteiligen radial äußeren Laufstreifenschicht aus einem porösen Gummimaterial und einer einteiligen oder in axialer Richtung mehrteiligen, radial inneren Laufstreifenschicht aus einem oder mehreren porösen Gummimaterial(en) zusammengesetzt ist,

wobei die Gummimaterialen jeweils eine Porosität, eine Shore A-Härte gemäß **DIN** EN ISO 868 und einen Speicherdehnmodul E' aufweisen,
wobei die Porosität des bzw. jedes porösen Gummimaterials der radial inneren Laufstreifenschicht von der Porosität des porösen Gummimaterials der radial äußeren Laufstreifenschicht abweicht.

Ein derartiger Fahrzeugluftreifen ist beispielsweise aus der EP 2 987 651 A1 bekannt. Dieser Fahrzeugluftreifen weist einen Laufstreifen mit einer dünnen, radial äußeren Laufstreifendeckschicht, einer mittleren Laufstreifenschicht aus einem porösen Gummimaterial und einer radial inneren Laufstreifenschicht auf. Die radial äußere Laufstreifendeckschicht kann ebenfalls aus einem porösen Gummimaterial bestehen. Die radial äußere Laufstreifendeckschicht und die mittlere Laufstreifenschicht bilden somit einen entsprechenden, die Profilierung enthaltenden, radial äußeren Laufstreifenteil. Die mittlere Laufstreifenschicht ist für die Aufnahme eines Schmelzwasserfilms, welcher sich beim Fahren auf Eis bildet, günstig. Der Elastizitätsmodul des Gummimaterials der radial äußeren Laufstreifendeckschicht ist kleiner ist als der Elastizitätsmodul des Gummimaterials der mittleren Laufstreifenschicht, was im Hinblick auf die Eisperformance bei neuem Reifen bzw. wenig abgeriebenen Laufstreifen günstig ist. Das Gummimaterial der radial äußeren Laufstreifendeckschicht ist weicher als jenes der radial inneren Laufstreifenschicht. Die Expansionsrate ("foaming ratio") des Gummimaterials der radial äußeren Laufstreifendeckschicht ist kleiner als 40% und die Expansionsrate des Gummimaterials der mittleren Laufstreifenschicht beträgt 3% bis 40%. Je nach Expansionsrate kann daher die Porosität des Gummimaterials der radial äußeren Laufstreifendeckschicht kleiner oder größer sein als jene des Gummimaterials der mittleren Laufstreifenschicht. Der Reifen soll eine gute Eisperformance aufweisen.

Aus der JP H02 189 203 A ist ein Fahrzeugreifen mit einem Laufstreifen aus einer radial äußeren Laufstreifenschicht und einer radial inneren Laufstreifenschicht bekannt. Die radial äußere Laufstreifenschicht besteht aus einem porösen Gummimaterial mit einer Expansionsrate ("foaming ratio") von 5% bis 50%. Das Gummimaterial der radial inneren Laufstreifenschicht weist eine größere Shore-A-Härte auf als das Gummimaterial der radial äußeren Laufstreifenschicht und ferner eine kleinere Expansionsrate als das Gummimaterial der radial äußeren Laufstreifenschicht auf, wobei das Gummimaterial der radial inneren Laufstreifenschicht nicht porös ist. Die Shore-A-Härte des Gummimaterials der radial inneren Laufstreifenschicht beträgt 54 ShA bis 80 ShA. Der Laufstreifen weist ferner eine dünne, radial äußerste Laufstreifendeckschicht auf, welche die Rissbeständigkeit der Rillengründe von zum Laufstreifenprofil gehörenden, schmalen Rillen verbessert. Das Gummimaterial der radial äußersten Laufstreifendeckschicht kann ein poröses Gummimaterial sein, wobei die Porosität kleiner ist als jene der radial äußeren Laufstreifenschicht. Dieser Fahrzeugreifen soll eine gute Schnee- und Eisperformance aufweisen.

Aus der JP 2007 131 084 A ist ein Fahrzeugreifen mit einem Laufstreifen mit einer die Laufstreifenaußenfläche mitbildenden, radial äußeren Laufstreifenschicht, einer radial mittleren Laufstreifenschicht und einer radial inneren Laufstreifenschicht bekannt. Die radial äußere Laufstreifenschicht und die radial mittlere Laufstreifenschicht bestehen jeweils aus einem porösen Gummimaterial, wobei das poröse Gummimaterial der radial äußeren Laufstreifenschicht langgestreckte Luftblasen und sphärische Luftblasen enthält, welche jeweils von einer Schutzschicht umgeben sind. Das Gummimaterial der radial äußeren Laufstreifenschicht weist von sämtlichen Gummimaterialen des Laufstreifens die größte Porosität auf. Der Reifen soll eine gute Eisperformance aufweisen.

Aus der JP H06 870 8 A ist ferner ein Fahrzeugreifen mit einem in radialer Richtung dreischichtigen Laufstreifen bekannt. Die Laufstreifenschichten bestehen jeweils aus einem porösen Gummimaterial, wobei die Expansionsrate ("foaming rate") vom Gummimaterial der radial äußeren Laufstreifenschicht am kleinsten und die Expansionsrate vom Gummimaterial der radial inneren Laufstreifenschicht am größten ist, sodass folglich die Porosität des Gummimaterialies der radial äußeren Laufstreifenschicht am kleinsten und die Porosität des Gummimaterials der radial inneren Laufstreifenschicht am größten ist. Dieser Reifen soll sich für den Ganzjahreseinsatz eignen, wobei kein verstärkter schulterseitiger Laufstreifenabrieb auftreten soll und wobei bei abgeriebenen Laufstreifen eine gute Eisperformance aufrechterhalten bleibt.

Aus der US 4 340 103 A ist ferner ein Fahrzeugluftreifen mit einem profilierten Laufstreifen aus einem porösen Gummimaterial bekannt, welches aus einem partiell zusammengeschmolzenen Gummigranulat gefertigt ist. Der Reifen soll einen geringen Rollwiderstand aufweisen.

Fahrzeugluftreifen, welche für den Einsatz unter winterlichen Fahrbedingungen, insbesondere in skandinavischen Ländern, vorgesehen sind, sind vor allem im Hinblick auf ihre Winterperformance auf Schnee und Eis zu optimieren. Üblicherweise sind die Laufstreifen solcher Reifen mit einer Vielzahl von Einschnitten versehen und bestehen aus einem auch bei tiefen Temperaturen weichen Gummimaterial, welchem typischer Weise eine Kautschukmischung zugrunde liegt, die große Mengen an Weichmacher enthält. Solche Fahrzeugluftreifen sind im Hinblick auf die Brems- und Handlingeigenschaften sowohl auf eis- und/oder schneebedeckter Fahrbahn als auch auf eis- und schneefreier Fahrbahn verbesserungsfähig.

Der Erfindung liegt daher die Aufgabe zugrunde, bei einem Fahrzeugluftreifen der eingangs genannten Art die Winterperformance auf Schnee und Eis sowie gleichermaßen die Performance auf eis- und schneefreier Fahrbahn, insbesondere jeweils im Hinblick auf die Handling- und Bremseigenschaften, auf möglichst ausbalancierte Weise zu verbessern.

Gelöst wird die gestellte Aufgabe erfindungsgemäß dadurch,

dass die Shore A-Härte des bzw. jedes porösen Gummimaterials der radial inneren Laufstreifenschicht größer ist als die Shore A-Härte des Gummimaterials der radial äußeren Laufstreifenschicht,
wobei der Speicherdehnmodul E' des bzw. jedes porösen Gummimaterials der radial inneren Laufstreifenschicht größer ist als der Speicherdehnmodul E' des Gummimaterials der radial äußeren Laufstreifenschicht und
wobei das poröse Gummimaterial der radial äußeren Laufstreifenschicht aus einer ersten Kautschukmischung mit zumindest einem Treibmittel, insbesondere mit Blähgrafit, einem Carbonat, einem Hydrazid, einer Azoverbindung oder einer Diazoverbindung, gefertigt ist und wobei das bzw. jedes poröse Gummimaterial der radial inneren Laufstreifenschicht aus einer zweiten Kautschukmischung mit zumindest einem Treibmittel, insbesondere mit Blähgrafit, einem Carbonat, einem Hydrazid, einer Azoverbindung oder einer Diazoverbindung, gefertigt ist, wobei sich die Gesamtmenge an Treibmittel in der ersten Kautschukmischung von der Gesamtmenge an Treibmittel in der zweiten Kautschukmischung unterscheidet und/oder wobei sich das bzw. die in der ersten Kautschukmischung eingesetzte(n) Treibmittel von dem bzw. den in der zweiten Kautschukmischung eingesetzten Treibmittel in seiner Blähwirkung unterscheidet bzw. in ihrer Blähwirkung unterscheiden.

Der Reifen weist daher einen Laufstreifen mit aus verschieden porös ausgeführten Gummimaterialen bestehenden Laufstreifenschichten auf. Erfindungsgemäß werden die gewünschten Eigenschaften der Gummimaterialien zumindest Großteils über die Porosität "eingestellt" bzw. "erzielt". Jene Laufstreifenschichten bzw. Laufstreifenteile, deren Gummimaterial die größere Porosität aufweist, gewährleisten, insbesondere auch bei tiefen Temperaturen, eine hohe Elastizität des Laufstreifens, sodass sich dieser beim Abrollen des Reifens auf eine für die Winterperformance auf Schnee und Eis besonders vorteilhafte Weise an den Untergrund anpasst. Die radial innere Laufstreifenschicht aus Gummimaterial mit größerer Shore A-Härte und größerem Speicherdehnmodul E' sorgt für die Aufrechterhaltung einer hohen Steifigkeit, wodurch Vorteile im Hinblick auf Kraftübertragung bei höheren Reibwerten und somit eine gute Performance auf eis- und schneefreier Fahrbahn erzielt werden. Die Performanceverbesserung betrifft dabei insbesondere die Handling- und Bremseigenschaften.

Gemäß einer bevorzugten Ausführung beträgt die Porosität des porösen Gummimaterials der radial äußeren Laufstreifenschicht 15% bis 25%.

Gemäß einer weiteren bevorzugten Ausführung beträgt die Shore A-Härte gemäß DIN EN ISO 868 des Gummimaterials der radial äußeren Laufstreifenschicht 40,0 ShA bis 53,0 ShA, insbesondere 43,0 ShA bis 50,0 ShA. Dies trägt zur Aufrechterhaltung einer hohen Elastizität des Laufstreifens bei und ist somit für die Winterperformance auf Schnee und Eis von zusätzlichem Vorteil.

Ferner ist es von Vorteil, wenn der Speicherdehnmodul E' des porösen Gummimaterials der radial äußeren Laufstreifenschicht 5,0 MPa bis 20,0 MPa, insbesondere 8,0 MPa bis 15,0 MPa, beträgt.

Gemäß einer weiteren bevorzugten Ausführung beträgt die Porosität des bzw. jedes porösen Gummimaterials der radial inneren Laufstreifenschicht 5% bis 15% oder 25% bis 35%. Eine radial innere Laufstreifenschicht aus einem Gummimaterial mit der Porosität von 5% bis 15% trägt zu einer Optimierung des Reifens im Hinblick auf seine Performance auf eis- und schneefreier Fahrbahn bei. Eine radial innere Laufstreifenschicht aus einem Gummimaterial mit der Porosität von 25% bis 35% trägt zu einer zusätzlichen Optimierung des Reifens im Hinblick auf seinen Rollwiderstand bei.

Bevorzugter Weise beträgt die Shore A-Härte gemäß DIN EN ISO 868 des bzw. jedes porösen Gummimaterials der radial inneren Laufstreifenschicht 58,0 ShA bis 71,0 ShA, insbesondere 63,0 ShA bis 68,0 ShA. Dies verbessert die Kraftübertragung bei höheren Reibwerten weiter und ist somit für eine gute Performance auf eis- und schneefreier Fahrbahn von zusätzlichem Vorteil.

Eine weitere bevorzugte Ausführung sieht vor, dass der Speicherdehnmodul E' des bzw. jedes porösen Gummimaterials der radial inneren Laufstreifenschicht 30,0 MPa bis 70,0 MPa, insbesondere 40,0 MPa bis 60,0 MPa, beträgt. Auch diese Ausführung trägt zu einer verbesserten Kraftübertragung bei höheren Reibwerten (eis- und schneefreie Fahrbahn) bei.

Bei einer weiteren bevorzugten Ausführung die Gesamtmenge an Treibmittel in der ersten und in der zweiten Kautschukmischung jeweils 3,0 phr bis 30,0 phr, insbesondere 10,0 phr bis 20,0 phr, beträgt, wobei die Gesamtmenge an Treibmittel in der ersten Kautschukmischung von der Gesamtmenge an Treibmittel in der zweiten Kautschukmischung vorzugsweise um zumindest 2,0 phr abweicht.

Vorteilhaft ist ferner eine Ausführung, bei welcher die radial äußere Laufstreifenschicht an nicht profilierten Stellen eine in radialer Richtung ermittelte maximale Dicke von 40% bis 80%, insbesondere von 60% bis 70%, der an nicht profilierten Stellen in radialer Richtung ermittelten maximalen Dicke des radial äußeren Laufstreifenteils aufweist. Dies ist im Hinblick auf die zu erzielende Balance zwischen der Winterperformance auf Schnee und Eis und der Performance auf eis- und schneefreier Fahrbahn von weiterem Vorteil.

Eine weitere bevorzugte Ausführung ist dadurch gekennzeichnet, dass die radial äußere Laufstreifenschicht, im Querschnitt betrachtet, 30% bis 60%, insbesondere 40% bis 50%, der Fläche des radial äußeren Laufstreifenteils einnimmt. Dies ist ebenfalls für die erwähnte Balance günstig.

Gemäß einer weiteren bevorzugte Ausführung ist vorgesehen, dass die radial innere Laufstreifenschicht in axialer Richtung mehrteilig ist, wobei sie sich aus einem mittigen Schichtteil und zwei schulterseitigen Schichtteilen zusammensetzt, wobei sich das poröse Gummimaterial des mittigen Schichtteils vom porösen Gummimaterial der schulterseitigen Schichtteile in seiner Porosität, seiner Shore A-Härte und seinem Speicherdehnmodul E' unterscheidet. Dies ist vor allem im Hinblick auf Handlingeigenschaften auf eis- und schneefreier Fahrbahn von Vorteil.

Bei der zuletzt erwähnten Ausführung besteht eine vorteilhafte Weiterbildung darin, dass der mittige Schichtteil in axialer Richtung eine Breite von 55% bis 85%, insbesondere von 65% bis 75%, der Breite der Bodenaufstandsfläche des Laufstreifens aufweist.

Eine weitere vorteilhafte Weiterbildung der zuletzt erwähnten Ausführung sieht vor, dass die Porosität des porösen Gummimaterials des mittigen Schichtteils kleiner ist als die Porosität des porösen Gummimaterials der schulterseitigen Schichtteile. Diese Variante ist zusätzlich für einen geringen Rollwiderstand von Vorteil.

Weitere Merkmale, Vorteile und Einzelheiten der Erfindung werden nun anhand der Zeichnung, die schematisch Ausführungsbeispiele der Erfindung zeigt, näher beschrieben. Dabei zeigen

Fig. 1 einen Querschnitt durch einen Fahrzeugluftreifen im Bereich des Laufstreifens und des Gürtelverbands mit einem ersten Ausführungsbeispiel der Erfindung,

Fig. 2 einen Querschnitt durch einen Fahrzeugluftreifen im Bereich des Laufstreifens und des Gürtelverbands mit einem zweiten Ausführungsbeispiel der Erfindung und

Fig. 3 einen Querschnitt durch einen Fahrzeugluftreifen im Bereich des Laufstreifens und des Gürtelverbands mit einem dritten Ausführungsbeispiel der Erfindung.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 bis 24 Zoll, insbesondere von 18 bis 23 Zoll.

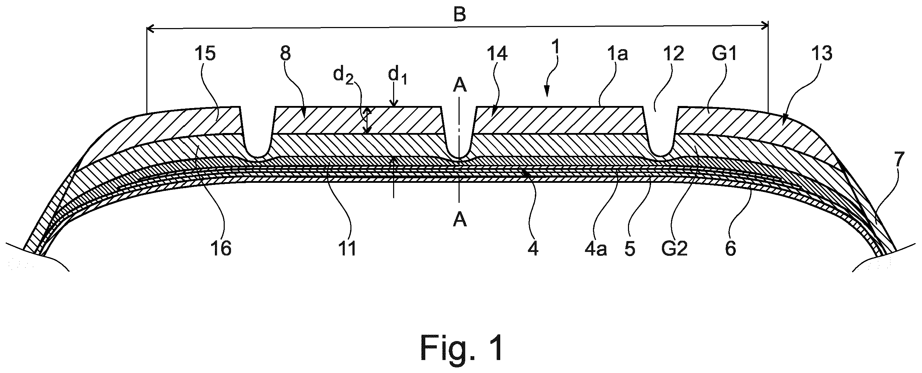

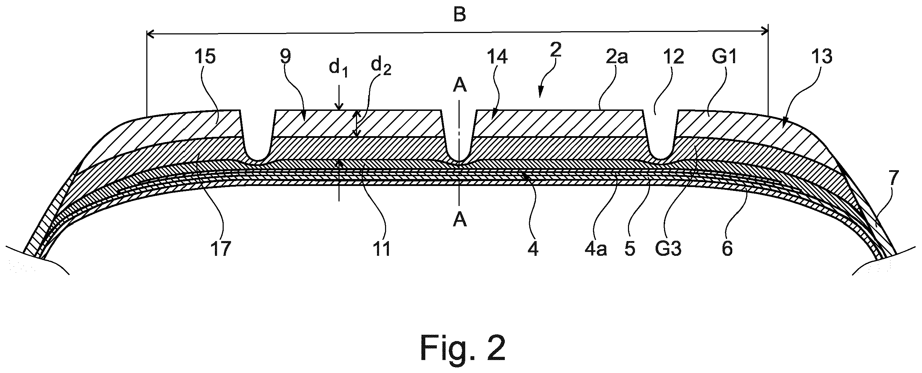

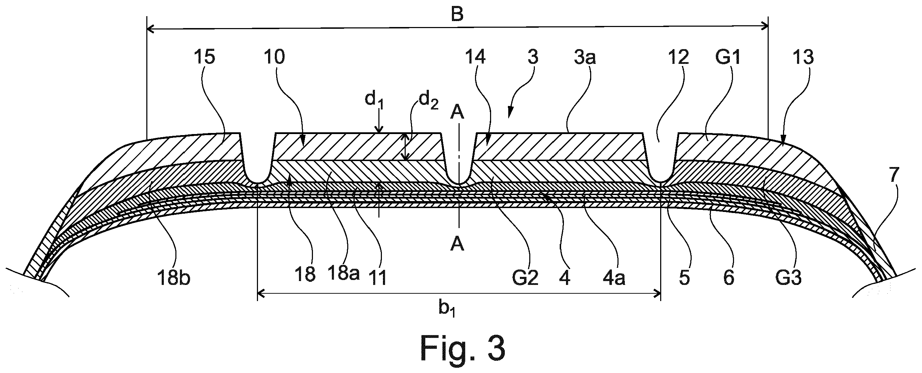

**In** Fig. 1 bis Fig. 3 sind von den wesentlichen Bauteilen eines Fahrzeugluftreifens jeweils ein profilierter Laufstreifen 1 (Fig. 1), 2 (Fig. 2), 3 (Fig. 3), ein Gürtelverband 4 mit zwei Gürtellagen 4a, Abschnitte einer Karkasseinlage 5 und einer Innenschicht 6 sowie die radial äußeren Endabschnitte von Seitenwänden 7 dargestellt. Ferner kann der Fahrzeugluftreifen eine den Gürtelverband 4 radial außen bedeckende Gürtelbandage aufweisen. Die Reifenäquatorialebene ist jeweils durch eine Linie A-A gekennzeichnet. Der Laufstreifen 1, 2, 3 weist eine in der Laufstreifenperipherie liegende Laufstreifenaußenfläche 1a, 2a, 3a sowie eine Bodenaufstandsfläche mit einer in axialer Richtung ermittelten Breite B auf (Footprintbreite, ermittelt mit einem auf einer Normfelge montierten Reifen, Last bei 70 % der maximalen Tragfähigkeit, Innendruck 85 % des Normdruckes, gemäß ETRTO-Standards).

Der Gürtelverband 4, die Karkasseinlage 5, die Innenschicht 6 und die Seitenwände 7 können in an sich bekannter Weise ausgeführt sein.

Der Laufstreifen 1, 2, 3 setzt sich in radialer Richtung aus einer die Profilierung des Laufstreifens 1, 2, 3 enthaltenden, bis zu den Seitenwänden 7 reichenden Laufstreifencap 8 (Laufstreifen 1), 9 (Laufstreifen 2), 10 (Laufstreifen 3) und einer radial innerhalb der Laufstreifencap 8, 9, 10 verlaufenden, insbesondere in bekannter Weise ausgeführten Laufstreifenbase 11 zusammen, wobei sich die Laufstreifenbase 11, im Querschnitt betrachtet, über die in axialer Richtung ermittelte maximale Breite (Breite an der breitesten Stelle) der Laufstreifencap 8, 9, 10 erstreckt. Sowohl die Laufstreifencap 8, 9, 10 als auch die Laufstreifenbase 11 verlaufen über den gesamten Umfang des Reifens. Die Laufstreifencap 8, 9, 10 weist, im Querschnitt betrachtet, eine an nicht profilierten Stellen innerhalb der Bodenaufstandsfläche in radialer Richtung ermittelte, maximale Dicke $d_1$ (Dicke an der dicksten Stelle) auf.

Zur Profilierung des Laufstreifens 1, 2, 3 gehören drei, in Umfangsrichtung umlaufende Umfangsrillen 12, welche der Laufstreifencap 8, 9, 10 und damit dem Laufstreifen 1, 2, 3 zwei schulterseitige Profilrippen 13 und zwei mittlere Profilrippen 14 verleihen. Die Profilrippen 13, 14 sind insbesondere in bekannter Weise mit Rillen und/oder Einschnitten strukturiert, welche ebenfalls zur Profilierung gehören.

Die Umfangsrillen 12 sind in radialer Richtung auf die jeweils vorgesehene Profiltiefe ausgeführt, welche für den bevorzugt vorgesehenen Reifentyp (PKW, Van, SUV) insbesondere 6,5 mm bis 13,0 mm beträgt und weisen an der Laufstreifenperipherie in axialer Richtung eine Breite von vorzugsweise 3,0 mm bis 13,0 mm auf.

Nachfolgend wird die Ausgestaltung der Laufstreifencap 8, 9, 10 weiter erläutert, wobei auf folgende Gummieigenschaften (Elastomereigenschaften, Vulkanisateigenschaften) näher eingegangen wird:

- Porosität (ermittelt in bekannter Weise mit einem Elektronenmikroskop)
- Shore A-Härte gemäß DIN EN ISO 868 (ISO 868:2003, Ausgabe 2003-10)
- Speicherdehnmodul E'

Der Speicherdehnmodul E' wurde wie folgt bestimmt:

1. Ermittlung des dynamischen Dehnmoduls |E*| sowie des Verlustfaktors tan $\delta$ jeweils gemäß DIN 53513 (Ausgabe 1990-03), wobei die Ermittlung folgendermaßen durchgeführt wurde:

1a) Konditionierung der gemäß der DIN 53513 vorgesehenen Probekörper mit folgenden Bedingungen:

- Kompression von 20% +/- 12%
- Frequenz von 10 Hz
- Temperatur von 23°C +/- 2°C

1b) Messung der konditionierten Probekörper unter folgenden Bedingungen:

- Kompression von 10% +/- 0,2%
- Frequenz von 10 Hz
- Temperatur von -15°C

2. Berechnung des Verlustwinkels $\delta$ aus dem ermittelten Verlustfaktor tan $\delta$
3. Berechnung des Speicherdehnmoduls E' mittels folgender allgemein bekannter Beziehung:

$$E' = |E^*| \cdot \cos \delta$$

Die Laufstreifencap 8, 9, 10 weist eine die Laufstreifenaußenfläche 1a, 2a, 3a mitbildende radial äußere Capschicht 15 mit einer an nicht profilierten Stellen in radialer Richtung ermittelten maximalen Dicke $d_2$ (Dicke an der oder einer der dicksten Stelle(n)) von 40% bis 80%, insbesondere von 60% bis 70%, der maximalen Dicke $d_1$ der Laufstreifencap 8, 9, 10 auf. Die radial äußere Capschicht 15 nimmt, in jedem senkrecht zur Reifenäquatorialebene sowie in radialer Richtung verlaufenden Querschnitt betrachtet, vorzugsweise 30% bis 60%, insbesondere 40% bis 50%, der Fläche der Laufstreifencap 8, 9, 10 ein.

Die radial äußere Capschicht 15 besteht aus einem Gummimaterial G1 (Elastomer, Vulkanisat) mit einer Porosität von 15% bis 25%, einer Shore A-Härte von 40,0 ShA (Shore A) bis 53,0 ShA, insbesondere von 43,0 ShA bis 50,0 ShA, und einen Speicherdehnmodul E' von 5,0 MPa bis 20,0 MPa, insbesondere von 8,0 MPa bis 15,0 MPa.

Gemäß Fig. 1 setzt sich die Laufstreifencap 8 in radialer Richtung aus der radial äußeren Capschicht 15 und einer radial inneren Capschicht 16 zusammen. Die radial innere Capschicht 16 besteht aus einem Gummimaterial G2 mit einer Porosität von 5% bis 15%, wobei die Porosität des Gummimaterials G2 kleiner ist als die Porosität des Gummimaterials G1. Das Gummimaterial G2 weist eine Shore A-Härte von 58,0 ShA bis 71,0 ShA, insbesondere von 63,0 ShA bis 68,0 ShA, und einen Speicherdehnmodul E' von 30,0 MPa bis 70,0 MPa, insbesondere von 40,0 MPa bis 60,0 MPa, auf.

Bei der in Fig. 2 gezeigten Ausführungsform setzt sich die Laufstreifencap 9 in radialer Richtung aus der radial äußeren Capschicht 15 und einer radial inneren Capschicht 17 zusammen. Die radial innere Capschicht 17 besteht aus einem Gummimaterial G3 mit einer Porosität von 25% bis 35%, wobei die Porosität des Gummimaterials G3 größer ist als die Porosität des Gummimaterials G1. Das Gummimaterial G3 weist eine Shore A-Härte von 58,0 ShA bis 71,0 ShA, insbesondere von 63,0 ShA bis 68,0 ShA, und einen Speicherdehnmodul E' von 30,0 MPa bis 70,0 MPa, insbesondere von 40,0 MPa bis 60,0 MPa, auf.

Bei der in Fig. 3 gezeigten Ausführungsform setzt sich die Laufstreifencap 10 aus der radial äußeren Capschicht 15 und einer in axialer Richtung mehrteiligen, radial inneren Capschicht 18 aus einem mittigen Schichtteil 18a und zwei schulterseitigen Schichtteilen 18b zusammen, wobei je ein schulterseitiger Schichtteil 18b in jeder Reifenschulter ausgebildet ist. Der mittige Schichtteil 18a besteht - wie die radial innere Capschicht 16 beim Ausführungsbeispiel in Fig. 1 - aus dem Gummimaterial G2. Die schulterseitigen Schichtteile 18b bestehen - wie die radial innere Capschicht 17 beim Ausführungsbeispiel in Fig. 2 - aus dem Gummimaterial G3. Der mittige Schichtteil 18a weist in axialer Richtung eine Breite $b_1$ von 55% bis 85%, insbesondere von 65% bis 75%, der Breite B auf, wobei die Breite $b_1$ vorzugsweise derart gewählt ist, dass der mittige Schichtteil 18a über die mittleren Profilippen 14 verläuft und die schulterseitigen Schichtteile 18b über je eine der schulterseitigen Profilrippen 13 verlaufen.

Die Gummimaterialen G1, G2, G3 der zur Laufstreifencap 8, 9, 10 gehörenden Capteile 15, 16, 17, 18a, 18b (radial äußere Capschicht 15, radial innere Capschicht 16, 17, mittiger Schichtteil 18a, schulterseitige Schichtteile 18b) sind jeweils aus einer Kautschukmischung gefertigt, welche zumindest ein Treibmittel, insbesondere Blähgrafit, ein Carbonat, ein Hydrazid, eine Azoverbindung oder eine Diazoverbindung, enthält.

Damit die Gummimaterialen G1, G2, G3 die bereits beschrieben, verschiedenen Porositäten aufweisen, enthalten die zugrundeliegenden Kautschukmischungen voneinander abweichende Mengen an einem oder mehreren Treibmittel und/oder verschieden stark aufblähende Treibmittel. Je stärker die Blähwirkung des Treibmittels ist, desto größer ist die resultierende Porosität des Gummimaterials G1, G2, G3. Ferner ist die Porosität des Gummimaterials G1, G2, G3 umso größer, je mehr Treibmittel in der Kautschukmischung enthalten ist.

Die Kautschukmischung des Gummimaterials G1 unterscheidet sich von der Kautschukmischung des Gummimaterials G2 im Hinblick auf die enthaltene Menge an Treibmittel(n) und/oder im Hinblick auf das bzw. die Treibmittel selbst. Die Kautschukmischung des Gummimaterials G3 unterscheidet sich von den Kautschukmischungen der Gummimaterialen G1, G2 bezüglich der enthaltenen Menge an Treibmittel(n) und/oder bezüglich des bzw. der Treibmittel(s) sowie zusätzlich im Hinblick auf weitere Bestandteile der Kautschukmischung.

Gemäß einer ersten bevorzugten Variante enthalten die Kautschukmischungen dasselbe bzw. dieselben Treibmittel in verschiedene Mengen.

Gemäß einer zweiten bevorzugten Variante enthalten die Kautschukmischungen Treibmittel mit verschieden starker Blähwirkung, wobei die den Kautschukmischungen enthaltenen Mengen an Treibmittel übereinstimmen oder voneinander abweichen können.

Die Menge an Treibmittel und die verschiedenen Typen von Treibmittel in den Kautschukmischungen zeigen zwar einen gewissen Einfluss auf die Shore A-Härte und den Speicherdehnmodul E' der Gummimaterialen, jedoch können die Shore A-Härte und der Speicherdehnmodul E' in an sich bekannter Weise durch andere übliche Bestandteile der Kautschukmischungen, beispielsweise durch die Füllstoffe, die Bestandteile des Vernetzungssystems, den Weichmacher und/oder den Kautschuk, derart beeinflusst werden, dass diese in den erwähnten Bereichen liegen. Ferner kann auch über die Vulkanisationsparameter, insbesondere die Vulkanisationszeit und die Vulkanisationstemperatur, in bekannter Weise Einfluss auf die Shore A-Härte und den Speicherdehnmodul E' genommen werden. Im Hinblick auf die Shore A-Härte sind bekannter Weise vor allem Weichmacher und Füllstoffe relevant. Im Hinblick auf den Speicherdehnmodul E' sind bekannter Weise vor allem Weichmacher, Füllstoff(e) und Kautschuk(e) relevant.

Die Kautschukmischungen der Gummimaterialen G1, G2, G3 enthalten vorzugsweise ein oder mehrere Treibmittel in einer Menge (Gesamtmenge, Menge des Treibmittels bzw. Menge sämtlicher Treibmittel) von 3,0 phr bis 30,0 phr, insbesondere von 10,0 phr bis 20,0 phr. "phr" steht dabei für parts per hundred parts rubber. Diese Mengenangabe bezieht sich bekannter Weise jeweils auf 100 Massenteile des Grundpolymers bzw. bei Polymerblends auf jene der Grundpolymere. Bevorzugter Weise sind die in den jeweils vorhandenen Gummimaterialen G1, G2, G3 zugrundeliegenden Kautschukmischungen derart ausgeführt, dass sich die in jeder Kautschukmischung enthaltene Menge an Treibmittel um zumindest 2,0 phr von der Menge an Treibmittel in der bzw. jeder weiteren Kautschukmischung unterscheidet. Bevorzugt ist es daher beispielsweise, wenn die dem Gummimaterial G1 zugrundeliegende Kautschukmischung 7,0 phr Treibmittel, die dem Gummimaterial G2 zugrundeliegende Kautschukmischung 15,0 phr Treibmittel und die dem Gummimaterial G3 zugrundeliegende Kautschukmischung 20,0 phr Treibmittel enthält.

Die nachfolgende Tabelle enthält Beispiele für Kautschukmischungen der Gummimaterialen G1, G2, G3. Die Mengen sind in phr angegeben.

| Bestandteile [phr] | Kautschukmischung 1 für Laufstreifenteil aus Gummimaterial $G1_1$ | Kautschukmischung 2 für Laufstreifenteil aus Gummimaterial G2 | Kautschukmischung 3 für Laufstreifenteil aus Gummimaterial G3 |
|---|---|---|---|
| Naturkautschuk | 20 | 20 | 20 |
| Synthetischer Kautschuk | 80 | 80 | 80 |
| Treibmittel | 10 | 5 | 15 |
| Füllstoff(e) | 110 | 110 | 110 |

(fortgesetzt)

| Bestandteile [phr] | Kautschukmischung 1 für Laufstreifenteil aus Gummimaterial G1$_1$ | Kautschukmischung 2 für Laufstreifenteil aus Gummimaterial G2 | Kautschukmischung 3 für Laufstreifenteil aus Gummimaterial G3 |
|---|---|---|---|
| Weichmacher | 40 | 40 | 20 |
| Additive | 40 | 40 | 20 |
| Beschleuniger | 3 | 3 | 3 |
| Schwefel | 2 | 2 | 2 |

Die Erfindung ist auf die beschriebenen Ausführungsbeispiele nicht beschränkt.

Der Laufstreifen weist einen die Profilierung enthaltenden. die komplette Laufstreifenaußenfläche mitbildenden, radial äußeren Laufstreifenteil auf, welcher aus einer radial inneren Laufstreifenschicht und einer radial äußeren Laufstreifenschicht zusammengesetzt ist. Alternativ kann sich der Laufstreifen aus diesen Laufstreifenschichten zusammensetzen.

Bezugszeichenliste

| | |
|---|---|
| 1 | Laufstreifen |
| 1a | Laufstreifenaußenfläche |
| 2 | Laufstreifen |
| 2a | Laufstreifenaußenfläche |
| 3 | Laufstreifen |
| 3a | Laufstreifenaußenfläche |
| 4 | Gürtelverband |
| 4a | Gürtellage |
| 5 | Karkasseinlage |
| 6 | Innenschicht |
| 7 | Seitenwand |
| 8 | Laufstreifencap |
| 9 | Laufstreifencap |
| 10 | Laufstreifencap |
| 11 | Laufstreifenbase |
| 12 | Umfangsrille |
| 13 | schulterseitige Profilrippe |
| 14 | mittlere Profilrippe |
| 15 | radial äußere Capschicht |
| 16 | radial innere Capschicht |
| 17 | radial innere Capschicht |
| 18 | radial innere Capschicht |
| 18a | mittiger Schichtteil |
| 18b | schulterseitiger Schichtteil |
| A-A | Linie (Reifenäquatorialebene) |
| B, b$_1$ | Breite |
| d$_1$, d$_2$ | maximale Dicke |
| G1, G2, G3 | Gummimaterial |

**Patentansprüche**

1. Fahrzeugluftreifen mit einem eine Profilierung enthaltenden Laufstreifen (1, 2, 3), welcher aus porösem Gummimaterial (G1, G2, G3) besteht oder einen aus porösem Gummimaterial (G1, G2, G3) bestehenden, die Profilierung enthaltenden, die Laufstreifenaußenfläche (1a, 2a, 3a) mitbildenden, radial äußeren Laufstreifenteil (8, 9, 10) aufweist, wobei der aus porösem Gummimaterial (G1, G2, G3) bestehende Laufstreifen (1, 2, 3) bzw. der aus porösem Gummimaterial (G1, G2, G3) bestehende, radial äußere Laufstreifenteil (8, 9, 10) aus einer einteiligen radial äußeren Laufstreifenschicht (15) aus einem porösen Gummimaterial (G1) und einer einteiligen oder in axialer Richtung mehrteiligen, radial inneren Laufstreifenschicht (16, 17, 18) aus einem oder mehreren porösen Gummimaterial(en) (G2, G3) zusammengesetzt ist,

wobei die Gummimaterialen (G1, G2, G3) jeweils eine Porosität, eine Shore A-Härte gemäß DIN EN ISO 868 und einen Speicherdehnmodul E' gemäß DIN 53513 Ausgabe 1990-03 und den Messbedingungen: Kompression 10% +/- 0,2%, Frequenz 10 Hz und Temperatur -15°C, aufweisen.
wobei die Porosität des bzw. jedes porösen Gummimaterials (G2, G3) der radial inneren Laufstreifenschicht (16, 17, 18) von der Porosität des porösen Gummimaterials (G1) der radial äußeren Laufstreifenschicht (15) abweicht, **dadurch gekennzeichnet,**
**dass** die Shore A-Härte des bzw. jedes porösen Gummimaterials (G2, G3) der radial inneren Laufstreifenschicht (16, 17, 18) größer ist als die Shore A-Härte des Gummimaterials (G1) der radial äußeren Laufstreifenschicht (15),
wobei der Speicherdehnmodul E' des bzw. jedes porösen Gummimaterials (G2, G3) der radial inneren Laufstreifenschicht (16, 17, 18) größer ist als der Speicherdehnmodul E' des Gummimaterials (G1) der radial äußeren Laufstreifenschicht (15) und
wobei das poröse Gummimaterial (G1) der radial äußeren Laufstreifenschicht (8, 9, 10) aus einer ersten Kautschukmischung mit zumindest einem Treibmittel, insbesondere mit Blähgrafit, einem Carbonat, einem Hydrazid, einer Azoverbindung oder einer Diazoverbindung, gefertigt ist und wobei das bzw. jedes poröse Gummimaterial (G2, G3) der radial inneren Laufstreifenschicht (16, 17, 18) aus einer zweiten Kautschukmischung mit zumindest einem Treibmittel, insbesondere mit Blähgrafit, einem Carbonat, einem Hydrazid, einer Azoverbindung oder einer Diazoverbindung, gefertigt ist, wobei sich die Gesamtmenge an Treibmittel in der ersten Kautschukmischung von der Gesamtmenge an Treibmittel in der zweiten Kautschukmischung unterscheidet und/oder wobei sich das bzw. die in der ersten Kautschukmischung eingesetzte(n) Treibmittel von dem bzw. den in der zweiten Kautschukmischung eingesetzten Treibmittel in seiner Blähwirkung unterscheidet bzw. in ihrer Blähwirkung unterscheiden.

2. Fahrzeugluftreifen nach Anspruch 1, **dadurch gekennzeichnet, dass** die Porosität des porösen Gummimaterials (G1) der radial äußeren Laufstreifenschicht (15) 15% bis 25% beträgt.

3. Fahrzeugluftreifen nach Anspruch 1 oder 2, **dadurch gekennzeichnet, dass** die Shore A-Härte gemäß DIN EN ISO 868 des Gummimaterials (G1) der radial äußeren Laufstreifenschicht (15) 40,0 ShA bis 53,0 ShA, insbesondere 43,0 ShA bis 50,0 ShA, beträgt.

4. Fahrzeugluftreifen nach einem der Ansprüche 1 bis 3, **dadurch gekennzeichnet, dass** der Speicherdehnmodul E' des porösen Gummimaterials (G1) der radial äußeren Laufstreifenschicht (15) 5,0 MPa bis 20,0 MPa, insbesondere 8,0 MPa bis 15,0 MPa, beträgt.

5. Fahrzeugluftreifen nach einem der Ansprüche 1 bis 4, **dadurch gekennzeichnet, dass** die Porosität des bzw. jedes porösen Gummimaterials (G2, G3) der radial inneren Laufstreifenschicht (16, 17, 18) 5% bis 15% oder 25% bis 35% beträgt.

6. Fahrzeugluftreifen nach einem der Ansprüche 1 bis 5, **dadurch gekennzeichnet, dass** die Shore A-Härte gemäß DIN EN ISO 868 des bzw. jedes porösen Gummimaterials (G2, G3) der radial inneren Laufstreifenschicht (16, 17, 18) 58,0 ShA bis 71,0 ShA, insbesondere 63,0 ShA bis 68,0 ShA, beträgt.

7. Fahrzeugluftreifen nach einem der Ansprüche 1 bis 6, **dadurch gekennzeichnet, dass** der Speicherdehnmodul E' des bzw. jedes porösen Gummimaterials (G2, G3) der radial inneren Laufstreifenschicht (16, 17, 18) 30,0 MPa bis 70,0 MPa, insbesondere 40,0 MPa bis 60,0 MPa, beträgt.

8. Fahrzeugluftreifen nach einem der Ansprüche 1 bis 7, **dadurch gekennzeichnet, dass** die Gesamtmenge an Treibmittel in der ersten und in der zweiten Kautschukmischung jeweils 3,0 phr bis 30,0 phr, insbesondere 10,0 phr bis 20,0 phr, beträgt, wobei die Gesamtmenge an Treibmittel in der ersten Kautschukmischung von der Gesamtmenge an Treibmittel in der zweiten Kautschukmischung vorzugsweise um zumindest 2,0 phr abweicht.

9. Fahrzeugluftreifen nach einem der Ansprüche 1 bis 8, **dadurch gekennzeichnet, dass** die radial äußere Laufstreifenschicht (15) an nicht profilierten Stellen eine in radialer Richtung ermittelte maximale Dicke ($d_2$) von 40% bis 80%, insbesondere von 60% bis 70%, der an nicht profilierten Stellen in radialer Richtung ermittelten maximalen

Dicke ($d_1$) des radial äußeren Laufstreifenteils (8, 9, 10) aufweist.

10. Fahrzeugluftreifen nach einem der Ansprüche 1 bis 9, **dadurch gekennzeichnet, dass** die radial äußere Laufstreifenschicht (15), im Querschnitt betrachtet, 30% bis 60%, insbesondere 40% bis 50%, der Fläche des radial äußeren Laufstreifenteils (8, 9, 10) einnimmt.

11. Fahrzeugluftreifen nach einem der Ansprüche 1 bis 10, **dadurch gekennzeichnet, dass** die radial innere Laufstreifenschicht (18) in axialer Richtung mehrteilig ist, wobei sie sich aus einem mittigen Schichtteil (18a) und zwei schulterseitigen Schichtteilen (18b) zusammensetzt, wobei sich das poröse Gummimaterial (G2) des mittigen Schichtteils (18a) vom porösen Gummimaterial (G3) der schulterseitigen Schichtteile (18b) in seiner Porosität, seiner Shore A-Härte und seinem Speicherdehnmodul E' unterscheidet.

12. Fahrzeugluftreifen nach Anspruch 11, **dadurch gekennzeichnet, dass** der mittige Schichtteil (18a) in axialer Richtung eine Breite ($b_1$) von 55% bis 85%, insbesondere von 65% bis 75%, der Breite (B) der Bodenaufstandsfläche des Laufstreifens (3), ermittelt mit einem auf einer Normfelge montierten Reifen, Last bei 70 % der maximalen Tragfähigkeit, Innendruck 85 % des Normdruckes, gemäß ETRTO-Standard, aufweist.

13. Fahrzeugluftreifen nach Anspruch 11 oder 12, **dadurch gekennzeichnet, dass** die Porosität des porösen Gummimaterials (G2) des mittigen Schichtteils (18a) kleiner ist als die Porosität des porösen Gummimaterials (G3) der schulterseitigen Schichtteile (18b).

**Claims**

1. Pneumatic vehicle tyre comprising a tread (1, 2, 3) which contains a profiling and consists of porous rubber material (G1, G2, G3) or comprises a radially outer tread part (8, 9, 10) consisting of porous rubber material (G1, G2, G3), containing the profiling and conjointly forming the tread outer surface (1a, 2a, 3a), wherein the tread (1, 2, 3) consisting of porous rubber material (G1, G2, G3) or the radially outer tread part (8, 9, 10) consisting of porous rubber material (G1, G2, G3) is made up of a one-piece radially outer tread layer (15) of a porous rubber material (G1) and a one-piece, or axially multiple-piece, radially inner tread layer (16, 17, 18) of one or more porous rubber materials (G2, G3),

   wherein the rubber materials (G1, G2, G3) each have a porosity, a Shore A hardness in accordance with DIN EN ISO 868 and a storage elastic modulus E' in accordance with DIN 53513 edition 1990-03 under the following measurement conditions: compression 10% +/- 0.2%, frequency 10 Hz and temperature -15°C,
   wherein the porosity of the or each porous rubber material (G2, G3) of the radially inner tread layer (16, 17, 18) differs from the porosity of the porous rubber material (G1) of the radially outer tread layer (15),
   **characterized**
   **in that** the Shore A hardness of the or each porous rubber material (G2, G3) of the radially inner tread layer (16, 17, 18) is greater than the Shore A hardness of the rubber material (G1) of the radially outer tread layer (15),
   wherein the storage elastic modulus E' of the or each porous rubber material (G2, G3) of the radially inner tread layer (16, 17, 18) is greater than the storage elastic modulus E' of the rubber material (G1) of the radially outer tread layer (15), and
   wherein the porous rubber material (G1) of the radially outer tread layer (8, 9, 10) is made from a first rubber compound with at least one blowing agent, in particular with expandable graphite, a carbonate, a hydrazide, an azo compound or a diazo compound, and wherein the or each porous rubber material (G2, G3) of the radially inner tread layer (16, 17, 18) is made from a second rubber compound with at least one blowing agent, in particular with expandable graphite, a carbonate, a hydrazide, an azo compound or a diazo compound, wherein the total amount of blowing agent in the first rubber compound differs from the total amount of blowing agent in the second rubber compound and/or wherein the blowing agent(s) used in the first rubber mixture differ(s) from the blowing agent(s) used in the second rubber compound in terms of its/their expanding action.

2. Pneumatic vehicle tyre according to Claim 1, **characterized in that** the porosity of the porous rubber material (G1) of the radially outer tread layer (15) amounts to 15% to 25%.

3. Pneumatic vehicle tyre according to Claim 1 or 2, **characterized in that** the Shore A hardness in accordance with DIN EN ISO 868 of the rubber material (G1) of the radially outer tread layer (15) amounts to 40.0 ShA to 53.0 ShA, in particular 43.0 ShA to 50.0 ShA.

4. Pneumatic vehicle tyre according to one of Claims 1 to 3, **characterized in that** the storage elastic modulus E' of the porous rubber material (G1) of the radially outer tread layer (15) amounts to 5.0 MPa to 20.0 MPa, in particular 8.0 MPa to 15.0 MPa.

5. Pneumatic vehicle tyre according to one of Claims 1 to 4, **characterized in that** the porosity of the or each porous rubber material (G2, G3) of the radially inner tread layer (16, 17, 18) amounts to 5% to 15% or 25% to 35%.

6. Pneumatic vehicle tyre according to one of Claims 1 to 5, **characterized in that** the Shore A hardness in accordance with DIN EN ISO 868 of the or each porous rubber material (G2, G3) of the radially inner tread layer (16, 17, 18) amounts to 58.0 ShA to 71.0 ShA, in particular 63.0 ShA to 68.0 ShA.

7. Pneumatic vehicle tyre according to one of Claims 1 to 6, **characterized in that** the storage elastic modulus E' of the or each porous rubber material (G2, G3) of the radially inner tread layer (16, 17, 18) amounts to 30.0 MPa to 70.0 MPa, in particular 40.0 MPa to 60.0 MPa.

8. Pneumatic vehicle tyre according to one of Claims 1 to 7, **characterized in that** the total amount of blowing agent in the first and in the second rubber compound amounts in each case to 3.0 phr to 30.0 phr, in particular 10.0 phr to 20.0 phr, wherein the total amount of blowing agent in the first rubber compound deviates from the total amount of blowing agent in the second rubber compound preferably by at least 2.0 phr.

9. Pneumatic vehicle tyre according to one of Claims 1 to 8, **characterized in that** the radially outer tread layer (15) at non-profiled points has a maximum thickness ($d_2$), ascertained in the radial direction, of 40% to 80%, in particular 60% to 70%, of the maximum thickness ($d_1$), ascertained in the radial direction at non-profiled points, of the radially outer tread part (8, 9, 10).

10. Pneumatic vehicle tyre according to one of Claims 1 to 9, **characterized in that** the radially outer tread layer (15), as viewed in cross section, occupies 30% to 60%, in particular 40% to 50%, of the surface area of the radially outer tread part (8, 9, 10).

11. Pneumatic vehicle tyre according to one of Claims 1 to 10, **characterized in that** the radially inner tread layer (18) is in multiple pieces in the axial direction, being made up of a central layer part (18a) and two shoulder layer parts (18b), wherein the porous rubber material (G2) of the central layer part (18a) differs from the porous rubber material (G3) of the shoulder layer parts (18b) in its porosity, its Shore A hardness and its storage elastic modulus E'.

12. Pneumatic vehicle tyre according to Claim 11, **characterized in that** the central layer part (18a) has a width ($b_1$) in the axial direction of 55% to 85%, in particular 65% to 75%, of the width (B) of the ground contact area of the tread (3), ascertained with a tyre mounted on a standard rim under a load of 70% of the maximum load-bearing capacity and an internal pressure of 85% of the standard pressure in accordance with ETRTO standards.

13. Pneumatic vehicle tyre according to Claim 11 or 12, **characterized in that** the porosity of the porous rubber material (G2) of the central layer part (18a) is lower than the porosity of the porous rubber material (G3) of the shoulder layer parts (18b).

**Revendications**

1. Pneumatique de véhicule, avec une bande de roulement (1, 2, 3) contenant un profilage, qui est constitué de matériau caoutchouteux poreux (G1, G2, G3) ou qui présente une partie de bande de roulement (8, 9, 10) radialement extérieure, constituée de matériau caoutchouteux poreux (G1, G2, G3), contenant le profilage, participant à la formation de la surface extérieure de bande de roulement (1a, 2a, 3a), la bande de roulement (1, 2, 3) constituée de matériau caoutchouteux poreux (G1, G2, G3) ou la partie de bande de roulement radialement extérieure (8, 9, 10) constituée de matériau caoutchouteux poreux (G1, G2, G3) étant composée d'une couche de bande de roulement radialement extérieure en une partie (15) en un matériau caoutchouteux poreux (G1) et d'une couche de bande de roulement radialement intérieure en une partie ou en plusieurs parties dans la direction axiale (16, 17, 18) en un ou plusieurs matériau(x) caoutchouteux poreux (G2, G3),

les matériaux caoutchouteux (G1, G2, G3) présentant chacun une porosité, une dureté Shore A selon la norme DIN EN ISO 868 et un module de stockage E' selon la norme DIN 53513 édition 1990-03 et les conditions de mesure suivantes : compression 10 % +/- 0,2 %, fréquence 10 Hz et température -15 °C,
la porosité du ou de chaque matériau caoutchouteux poreux (G2, G3) de la couche de bande de roulement radialement intérieure (16, 17, 18) différant de la porosité du matériau caoutchouteux poreux (G1) de la couche de bande de roulement radialement extérieure (15),

**caractérisé en ce que**

la dureté Shore A du ou de chaque matériau caoutchouteux poreux (G2, G3) de la couche de bande de roulement radialement intérieure (16, 17, 18) est supérieure à la dureté Shore A du matériau caoutchouteux (G1) de la couche de bande de roulement radialement extérieure (15),
le module de stockage E' du ou de chaque matériau caoutchouteux poreux (G2, G3) de la couche de bande de roulement radialement intérieure (16, 17, 18) étant supérieur au module de stockage E' du matériau caoutchouteux (G1) de la couche de bande de roulement radialement extérieure (15) et
le matériau caoutchouteux poreux (G1) de la couche de bande de roulement radialement extérieure (8, 9, 10) étant fabriqué à partir d'un premier mélange de caoutchouc avec au moins un agent gonflant, notamment avec du graphite expansé, un carbonate, un hydrazide, un composé azoïque ou un composé diazoïque, et le ou chaque matériau caoutchouteux poreux (G2, G3) de la couche de bande de roulement radialement intérieure (16, 17, 18) étant fabriqué à partir d'un deuxième mélange de caoutchouc avec au moins un agent gonflant, notamment avec du graphite expansé, un carbonate, un hydrazide, un composé azoïque ou un composé diazoïque, la quantité totale d'agent gonflant dans le premier mélange de caoutchouc différant de la quantité totale d'agent gonflant dans le deuxième mélange de caoutchouc et/ou le ou les agents gonflants utilisés dans le premier mélange de caoutchouc différant du ou des agents gonflants utilisés dans le deuxième mélange de caoutchouc par son effet gonflant ou par leur effet gonflant.

2. Pneumatique de véhicule selon la revendication 1, **caractérisé en ce que** la porosité du matériau caoutchouteux poreux (G1) de la couche de bande de roulement radialement extérieure (15) est de 15 % à 25 %.

3. Pneumatique de véhicule selon la revendication 1 ou 2, **caractérisé en ce que** la dureté Shore A selon la norme DIN EN ISO 868 du matériau caoutchouteux (G1) de la couche de bande de roulement radialement extérieure (15) est de 40,0 ShA à 53,0 ShA, notamment de 43,0 ShA à 50,0 ShA.

4. Pneumatique de véhicule selon l'une quelconque des revendications 1 à 3, **caractérisé en ce que** le module de stockage E' du matériau caoutchouteux poreux (G1) de la couche de bande de roulement radialement extérieure (15) est de 5,0 MPa à 20,0 MPa, notamment de 8,0 MPa à 15,0 MPa.

5. Pneumatique de véhicule selon l'une quelconque des revendications 1 à 4, **caractérisé en ce que** la porosité du ou de chaque matériau caoutchouteux poreux (G2, G3) de la couche de bande de roulement radialement intérieure (16, 17, 18) est de 5 % à 15 % ou de 25 % à 35 %.

6. Pneumatique de véhicule selon l'une quelconque des revendications 1 à 5, **caractérisé en ce que** la dureté Shore A selon la norme DIN EN ISO 868 du ou de chaque matériau caoutchouteux poreux (G2, G3) de la couche de bande de roulement radialement intérieure (16, 17, 18) est de 58,0 ShA à 71,0 ShA, notamment de 63,0 ShA à 68,0 ShA.

7. Pneumatique de véhicule selon l'une quelconque des revendications 1 à 6, **caractérisé en ce que** le module de stockage du ou de chaque matériau caoutchouteux poreux (G2, G3) de la couche de bande de roulement radialement intérieure (16, 17, 18) est de 30,0 MPa à 70,0 MPa, notamment de 40,0 MPa à 60,0 MPa.

8. Pneumatique de véhicule selon l'une quelconque des revendications 1 à 7, **caractérisé en ce que** la quantité totale d'agent gonflant dans le premier et le deuxième mélange de caoutchouc est respectivement de 3,0 pce à 30,0 pce, notamment de 10,0 pce à 20,0 pce, la quantité totale d'agent gonflant dans le premier mélange de caoutchouc différant de préférence d'au moins 2,0 pce de la quantité totale d'agent gonflant dans le deuxième mélange de caoutchouc.

9. Pneumatique de véhicule selon l'une quelconque des revendications 1 à 8, **caractérisé en ce que** la couche de bande de roulement radialement extérieure (15) présente, à des emplacements non profilés, une épaisseur maximale ($d_2$) déterminée dans la direction radiale, qui est de 40 % à 80 %, notamment de 60 % à 70 %, de l'épaisseur maximale ($d_1$) déterminée dans la direction radiale à des emplacements non profilés de la partie de bande de roulement radialement extérieure (8, 9, 10).

10. Pneumatique de véhicule selon l'une quelconque des revendications 1 à 9, **caractérisé en ce que** la couche de bande de roulement radialement extérieure (15), considérée en coupe transversale, occupe 30 % à 60 %, notamment 40 % à 50 %, de la surface de la partie de bande de roulement radialement extérieure (8, 9, 10).

11. Pneumatique de véhicule selon l'une quelconque des revendications 1 à 10, **caractérisé en ce que** la couche de bande de roulement radialement intérieure (18) est en plusieurs parties dans la direction axiale, elle étant composée d'une partie de couche centrale (18a) et de deux parties de couche côté épaulement (18b), le matériau caoutchouteux poreux (G2) de la partie de couche centrale (18a) différant du matériau caoutchouteux poreux (G3) des parties de couche côté épaulement (18b) par sa porosité, sa dureté Shore A et son module de stockage E'.

12. Pneumatique de véhicule selon la revendication 11, **caractérisé en ce que** la partie de couche centrale (18a) présente, dans la direction axiale, une largeur ($b_1$) de 55 % à 85 %, notamment de 65 % à 75 %, de la largeur (B) de la surface de contact avec le sol de la bande de roulement (3) déterminée avec un pneu monté sur une jante standard, une charge de 70 % de la capacité de charge maximale, une pression interne de 85 % de la pression standard, conformément à la norme ETRTO.

13. Pneumatique de véhicule selon la revendication 11 ou 12, **caractérisé en ce que** la porosité du matériau caoutchouteux poreux (G2) de la partie de couche centrale (18a) est inférieure à la porosité du matériau caoutchouteux poreux (G3) des parties de couche côté épaulement (18b).

Fig. 1

Fig. 2

EP 4 378 712 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2987651 A1
- JP H02189203 A
- JP 2007131084 A
- JP H068708 A
- US 4340103 A